# EUROPÄISCHE PATENTSCHRIFT

(11) **EP 1 682 837 B1**
(45) Veröffentlichungstag und Bekanntmachung des Hinweises auf die Patenterteilung: **15.07.2009**
(21) Anmeldenummer: 04818396.6
(22) Anmeldetag: 12.11.2004
(51) Int. Cl.: F27B 7/20, F27D 23/00, F27B 7/38, F27B 7/36

(54) **VORRICHTUNG ZUM BRENNEN VON FESTSTOFFEN**
DEVICE FOR BURNING SOLID MATTER
SYSTEME POUR BRULER DES MATIERES SOLIDES

(30) Priorität: 13.11.2003 DE 10353225
(43) Veröffentlichungstag der Anmeldung: 26.07.2006
(73) Patentinhaber: Rheinkalk GmbH, 42489 Wülfrath (DE)
(72) Erfinder: KLINGBEIL, Lothar, 51109 Köln (DE); SCHWERTMANN, Thomas, 42781 Haan (DE)
(74) Vertreter: Cohausz & Florack
(86) Internationale Anmeldenummer: PCT/EP2004/012854
(87) Internationale Veröffentlichungsnummer: WO 2005/047795

(56) Entgegenhaltungen:
- DD-A1- 120 273
- DE-A1- 3 520 927
- DE-A1- 3 619 907
- DE-A1- 10 128 514
- DE-C- 551 115
- DE-C- 878 625
- US-A- 3 291 205
- US-A- 3 350 077

## Beschreibung

Die Erfindung betrifft eine Vorrichtung zum Brennen von Feststoffen, insbesondere zur Herstellung von Branntkalk, Dolomitkalk oder Zement, mit einem Drehrohrofen, in dem das längs durch den Ofen geförderte Brenngut mittels einer Brenneinheit gebrannt wird, mit einer dem Ofen nachgelagerten Kühlstrecke, in der mittels mindestens eines Kühlgebläses ein aufsteigender Kühlluftstrom zur Kühlung des in der Kühlstrecke auf einem Boden geförderten gebrannten Brenngutes erzeugt wird, wobei der Boden der Kühlstrecke Durchlaßöffnungen für den Kühlluftstrom aufweist, und mit einem den Auslauf des Drehrohrofens mit der Kühlstrecke verbindenden, einen Schachtraum aufweisenden Ofenkopf, wobei der das aus dem Ofen austretende und durch den Schachtraum auf den Boden der Kühlstrecke fallende gebrannte Brenngut durchströmende und dadurch erhitzte Kühlluftstrom durch den schachtraum in den Ofen aufsteigt und dort als Sekundärluft die Flamme der Brenne inheit L speist.

Vorrichtungen dieser Art sind aus der Praxis bekannt. Bei einer bekannten Vorrichtung strömt die durch das abkühlende gebrannte Brenngut erhitzte Kühlluft durch den Schachtraum des Ofenkopfes als Sekundärluft der Bronneinheit in den Drehrohrofen, wobei es an der Oberfläche des sich i n Richtung der Kühlstrecke, d. h. in entgegengesetzter Richtung zum Kühlluftstrom, durch den Schachtraum bewegenden Brenngutes beim Vorliegen staubförmiger und/oder kleinkörniger Anteile im gebrannten Brenngut zu einer starken Staubaufwirbelung kommt. Dies führt dazu, dass ein Großteil des aufgewirbelten Staubes teilweise mit den Prozess belastenden Komponenten wieder in den Drehrohrofen gelangt, wodurch der im Drehrohrofen erfolgende Brennprozess zusätzlich gestört wird. Das hat in der Regel eine Verschlechterung der Producktqualität infolge einer teilweisen Übcrbrennung des Brenngutes und eine geringere Betriebseffizienz des Ofensystems zur Folge, zudem besteht die Gefahr, dass sich überbranntes Brenngut an der Wandung des Drehrohrofens festsetzt.

Aus der US 3,350,077 A ist eine Vorrichtung zum Brennen von Feststoffen, insbesondere Zementklinker, Branntkalk oder gesinterten Erzen, bekannt. Sie umFasst einen Drehrohrofen mit einer Brenneinheit, einer dem Ofen nachgelagerten Kühlstrecke sowie einem einen Schachtraum aufweisenden Ofenkopf, welcher die Kühlstrecke mit dem Auslauf des Ofens verbindet. Der Schachtraum ist mittels eines quaderförmigen Konstruktionselementes in Transportrichtung des Gutes in zwei Teilschächte unterteilt wodurch der durch den einen Teilschacht aufsteigende erhitzte Kühlluftstrom von dem durch den anderen Teilschacht auf den Boden der Kühlstrecke fallenden Brenngut teilweise separiert wird.

Es ist daher Aufgabe der Erfindung eine Vorrichtung zu schaffen, welche die Rückführung eines weitgehend staubfreien Kühlluftstromes in den Drehrohrofen zum zwecke eines effizienten Betriebs des Drehrohrofens ermöglicht, wobei die Vorrichtung möglichst einfach gestaltet und kostengünstig zu realisieren sein sollte.

Die Aufgabe wird bei einer Vorrichtung gemäß dem Oberbegriff erfindungsgemäß dadurch gelöst, dass im Schachtraum mindestens eine Trennwand zur Separierung des aufsteigenden Kühlluftstromes von dem aus dem Ofen austretenden, auf den Boden der Kühlstrecke fallenden gebrannten Brenngut angeordnet sind, wobei die mindestens eine Trennwand höhenverstellbar ausgebildet ist.

Bei der erfindungsgemäßen Vorrichtung, bei der der Kühlluftstrom und das gebrannte Brenngut sich nach wie vor durch denselben Schachtraum in entgegengesetzter Richtung bewegen, wird durch die vorgesehenen Separiermittel verhindert, dass es zu einem nennenswerten streifenden Kontakt zwischen dem aufsteigenden erhitzten Kühlluftstrom und dem herabfallenden strom des gebrannten Brenngutes kommt. Entsprechend wird eine Staubaufwirbelung und Mitnahme des Staubes in dem Schachtraums fast vollständig vermieden, so dass der erhitzte Kühlluftstrom weitgehend staubfrei als die Verbrennung unterstützende Sekundärluft in den Drehrohrofen gelang. Die Mittel zur Separierung der Kühlluft von dem Brenngut können dabei beliebig einfach gestaltet und damit kostengünstig zu realisieren sein. Zweckmäßigerweise sind sie als eine oder mehrere Trennwände ausgebildet. Je nach Brennleistung des Drehrohrofens wird durch diesen Brenngut mit unterschiedlichen Massenströmen gefördert. Um unabhängig davon eine effektive Separierung des erhitzten Kühlluftstroms von dem gebrannten Brenngut zu gewährleisten, wird die Trennwand höhenverstellbar und vorteilhaft auch schwenkbar gelagert. Aufgrund der hohen Temperaturen, welche insbesondere bei der Herstellung von Zementklinker, Dolomit und Kalk im Schachtraum herrschen, ist es zudem zweckmäßig, wenn die Trennwand einerseits mit einer feuerfesten Beschichtung versehen und andererseits durch eine im Inneren der Trennwand vorgesehene Kühleinrichtung gekühlt ist.

Das von dem erhitzten Kühlluftstrom separierte gebrannte Brenngut trifft auf dem mit Durchlaßöffnungen versehenen Boden der Kühlstrecke auf, um dann weiter durch die Kühlstrecke gefördert zu werden. Um auch im Auftreffbereich eine kühlluftinduzierte Staubentwicklung beim Auftreffen des Brenngutes weitestgehend auszuschließen, ist es vorteilhaft, wenn die Kühlleistung der Kühlstrecke in diesem Bereich gegenüber dem dem Auftreffbereich nachfolgenden Bereich der Kühlstrecke reduziert ist. Dies kann beispielsweise durch eine Reduzierung des Volumenstroms der Kühlluft in diesem Bereich erfolgen.

In der Kalkproduktion liegt der zu brennende Kalk (CaCO₃) in stückiger Form vor. Im Zuge des Brennprozesses wird dieser in einer endothermen Reaktion nach und nach in Branntkalk (CaO) umgewandelt, wobei CO₂ abgespalten wird. Vielfach tritt das Brenngut in noch nicht vollständig umgewandelter Form in den Schachtraum. Um eine vollständige Umwandlung des Brenngutes im Schachtraum zu erreichen, ist nach einer vorteilhaften Ausgestaltung der Erfindung der Volumenstrom des vom Kühlgebläse in den Auftreffbereich des gebrannten Brenngutes einströmenden Kühlluftteilstromes einstellbar. Somit kann der Volumenstrom exakt so bemessen werden, dass einerseits sich das im Schachtraum herabfallende Brenngut nicht unter eine die Umwandlungsreaktion (Entsäuerungsreaktion) hemmende Temperatur abkühlt (ca. 700°C) und andererseits das Brenngut hinreichend mit Frischluft durchströmt wird, so dass das abgespaltene CO₂ effektiv aus dem Brenngutstrom heraustransportiert wird.

Wird der gesamte Kühlluftstrom durch ein einheitliches Kühlgebläse erzeugt, so kann eine exakte Einstellung des Volumenstromes des in den Auftreffbereich des gebrannten Brenngutes einströmenden Kühlluftteilstromes beispielsweise durch eine diesem Bereich vorgeordnete Drosselvorrichtung, etwa eine in einem Zuführungsrohr angeordnete Drosselklappe, eingestellt werden. Falls der das gebrannte Brenngut beaufschlagende Kühlluftteilstrom durch ein gesondertes Gebläse gespeist wird, so lässt sich der Volumenstrom einfach über die Ventilatordrehzahl präzise einstellen.

Nach einer weiteren Ausgestaltung der Erfindung ist vorgesehen, dass die Kühlstrecke derart ausgebildet ist, dass sich im Auftreffbereich des Brenngutes ein horizontaler Kühlluftstrom bildet. Damit wird das Brenngut auch in diesem Bereich bereits gekühlt, wodurch die Effizienz der Kühlstrecke erhöht wird, es entsteht dort jedoch kein staubbeladener aufsteigender Kühlluftstrom. Zweckmäßigerweise wird dies dadurch erreicht, dass der Boden der Kühlstrecke im Auftreffbereich treppenförmig ausgebildet ist.

Für einen möglichst effizienten Betrieb des Drehrohrofens ist neben der Staubfreiheit der Kühlluft ein optimierter Strömungsverlauf der Kühlluft im Schachtraum von entscheidender Bedeutung. Ferner ist es möglich, dass der Schachtraum des Ofenkopfes oberhalb der Austrittsöffnung des Drehrohrofens mindestens eine bewegliche Wand zur Steuerung des Strömungsverlaufes des aufsteigenden Luftstromes aufweist. Dabei ist diese vorzugsweise schwenkbar und/oder höhenverstellbar gelagert und/oder weist an ihrer Unterseite eine der Querschnittsform des Auslaufs des Drehrohrofens entsprechende konkave Ausrundung auf. Nach einer weiteren Ausgestaltung der Erfindung ist dazu vorgesehen, dass der Schachtraum des Ofenkopfes eine optimierte Form im Sinn einer Minimierung des Strömungswiderstandes aufweist.

Schließlich kann zum Zweck einer vereinfachten Wartung des Schachtraums des Ofenkopfes sowie der darin enthaltenen Komponenten an der Oberseite des Ofenkopfes eine Wartungsklappe vorgesehen sein.

Im Folgenden wird die Erfindung anhand einer ein Ausführungsbeispiel darstellenden Zeichnung näher erläutert. Es zeigen:
- Fig. 1: eine Vorrichtung zum Brennen von Feststoffen mit einem Drehrohrofen mit Ofenkopf und einer Kühlstrecke ausschnittsweise in schematisierter Seitenansicht und
- Fig. 2: eine bewegliche Wand zur Steuerung des Strömungsverlaufes des im Ofenkopf der Vorrichtung der Fig. 1 aufsteigenden Luftstromes in perspektivischer Ansicht.

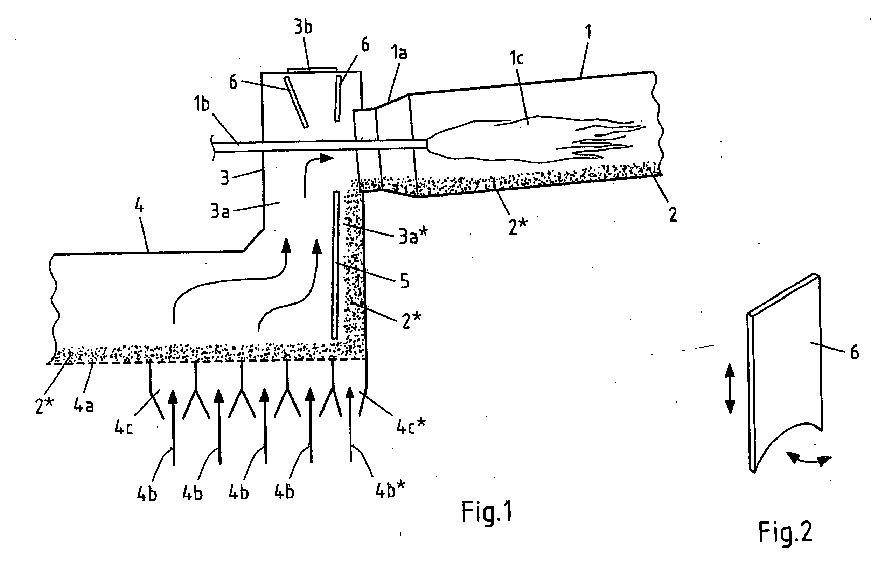

Gemäß Fig. 1 umfasst die erfindungsgemäße Vorrichtung einen zylindrischen Drehrohrofen 1 mit einem Einlauf (nicht dargestellt) und einem Auslauf 1a. Der Drehrohrofen 1 ist um seine gegenüber der Horizontalen geringfügig geneigte Längsachse drehbar gelagert, wobei der Einlauf des Ofens höher angeordnet ist als der Auslauf 1a. Der Auslauf 1a mündet in einen Ofenkopf 3, welcher einen Schachtraum 3a mit einer optimierten Form im Sinne einer Minimierung des Strömungswiderstandes eines durch den Schachtraum 3a durchströmenden Gases aufweist. Der Schachtraum 3a verbindet den Drehrohrofen 1 räumlich mit einer am Fuße des Ofenkopfes 3 angeordneten Kühlstrecke 4. Quer durch den Schachtraum 3a erstreckt sich eine Brennerlanze 1b, deren vorderes Ende in den Drehrohrofen 1 hineinragt und in der Längsachse des Drehrohrofens 1 liegt.

Weiterhin ist in dem Schachtraum 3a des Ofenkopfes 3 eine höhenverstellbar und schwenkbar gelagerte Trennwand 5 angeordnet, welche einen schmalen Bereich 3a* des Schachtraums 3a, der direkt unterhalb des Auslaufs 1a des Ofens 1 angeordnet ist, von dem restlichen Schachtraumvolumen abtrennt. Die Oberkante der Trennwand 5 befindet sich etwa auf Höhe der Unterkante des Ofenauslaufs 1a. Ihre Höhe ist geringfügig kleiner als der Abstand zwischen der Unterkante des Ofenauslaufs 1a und dem Boden 4a der Kühlstrecke 4, so dass der schmale Bereich 3a* des Schachtraums 3 mit dem restlichen Schachtraumvolumen durch eine Öffnung zwischen der Unterkante der Trennwand 5 und dem Boden 4a der Kühlstrecke 4 verbunden ist. Weiterhin ist die Trennwand 5 vorzugsweise mit einer feuerfesten Beschichtung versehen und durch eine im Inneren der Trennwand vorgesehene, nicht dargestellte Kühleinrichtung gekühlt, so dass sie auch sehr hohen Temperaturen standhält.

Oberhalb des in den Ofenkopf 3 mündenden Auslaufs 1a des Drehrohrofens 1 sind in dem Schachtraum 3a vorzugsweise zwei bewegliche Wände 6 angeordnet, die ihrerseits schwenkbar und/oder höhenverstellbar gelagert sind. An ihren jeweiligen Unterseiten weisen die Wände 6 vorzugsweise eine der Querschnittsform des Ofenauslaufs 1a entsprechende konkave Ausrundung auf (s. Fig. 2). Schließlich weist der Ofenkopf 3 an seiner Oberseite, die gleichzeitig den Deckenabschluss des Schachtraums 3a bildet, eine Wartungsklappe 3b auf.

Der Boden 4a der sich an den Fuß des Schachtraums 3a anschließenden Kühlstrecke 4 weist nach Art eines Rostes eine Vielzahl von Luftdurchlassöffnungen auf. Unterhalb des Bodens 4a sind eine Anzahl Luftkammern 4c angeordnet, die durch den von mindestens einem - nicht dargestellten - Kühlgebläse erzeugten Kühlluftstrom 4b, 4b* gespeist werden und diesen in die Kühlstrecke 4 einleiten. Die direkt unterhalb des durch die Trennwand 5 abgetrennten schmalen Schachtraumbereichs 3a* angeordnete Luftkammer 4c* ist gegenüber den folgenden Luftkammern 4c schmaler ausgeführt, so dass ihre Breite der Breite des schmalen Bereichs 3* entspricht.

Im folgenden wird die Arbeitsweise der Vorrichtung am Beispiel des Brennens von Kalkstein (CaCO3) zur Erzeugung von Branntkalk (CaO) erläutert. Für den Fall der Erzeugung von Dolomitkalk (CaO + MgO) aus Dolomit (CaCO3·MgCO3) gilt eine analoge Funktionsweise.

Der Kalkstein wird in gebrochener Form als Brenngut 2 bei Raumtemperatur oder nach Durchlauf einer Vorwärmeinheit (nicht dargestellt) erhitzt in den Drehrohrofen 1 über dessen Einlauf (nicht dargestellt) aufgegeben. Durch die Drehung des Drehrohrofens 1, die mittels eines nicht dargestellten Antriebes bewirkt wird, und die Neigung des Drehrohrofens 1 wird der Kalkstein 2 zum Auslauf 1a des Ofens 1 gefördert. Dabei wird er durch die aus der Brennerlanze 1b im Ofen 1 erzeugt Flamme 1c zu Branntkalk 2* gebrannt. Der Branntkalk 2* tritt nach Verlassen des Drehrohrofens 1 in den Ofenkopf 3 ein und fällt durch den durch die Trennwand 5 abgetrennten schmalen Bereich 3a* des Schachtraums 3a auf den Boden 4a der Kühlstrecke 4, wobei der fallende Branntkalk 2* dabei einen großen Teil des Volumens des Bereiches 3* ausfüllt. Von dem Auftreffbereich am Fuße des schmalen Bereiches 3a* des Schachtraums 3a wird der Branntkalk 2* nach Durchtritt durch die Öffnung zwischen dem unteren Ende der Trennwand 5 und dem Boden 4a entlang der Kühlstrecke 4 gefördert und dabei durch das im folgenden beschriebene Verfahren gekühlt. Dabei kann die Höhe und Winkelstellung der Trennwand 5 an den jeweils gewählten Massendurchsatz und des Kalksteins 2 bzw. des Branntkalks 2* und damit an die Materialbetthöhe auf dem Boden 4a der Kühlstrecke 4 in der Vorrichtung angepasst werden.

Durch das unterhalb der Kühlstrecke 4 angeordnete (nicht dargestellte) Kühlgebläse wird ein aufsteigender Kühlluftstrom 4b, 4b* erzeugt, der in die einzelnen Luftkammern 4c, 4c* geleitet wird und von dort aus durch die Durchlaßöffnungen des Bodens 4a in die Kühlstrecke 4 eintritt, wo er den heißen Branntkalk 2* durchströmt und dabei abkühlt. Der durch die Luftkammer 4c* in den Auftreffbereich des Branntkalks 2* eingeleitete Teilstrom 4b* hat einen gegenüber den anderen Teilströmen 4b reduzierten Volumenstrom, um eine Staubentwicklung im Schachtraum 3a und im Auftreffbereich des Branntkalks 2* weitgehend zu vermeiden.

Die nach Durchströmen des durch die Kühlstrecke geförderten, zu kühlenden Branntkalks 2* stark erhitzte Kühlluft 4d steigt im Schachtraum 3a des Ofenkopfes auf und strömt in den Drehrohrofen 1, wo sie neben der Primärluft als heiße Sekundärluft die Flamme 1c der Brennerlanze 1b speist. Aufgrund der strömungstechnisch optimierten Form des Schachtraums 3a und einer angepassten Stellung der als Luftleitbleche fungierenden beweglichen Wände 6 erfolgt diese Strömung verwirbelungsarm und bei minimiertem Strömungswiderstand. Dabei ist entscheidend, dass durch die Abtrennung des direkt unterhalb des Auslaufs 1a des Ofens 1 angeordneten schmalen Bereichs 3a* des Schachtraums 3a, durch welchen der Branntkalk auf den Boden 4a der Kühlstrecke 4 fällt, von dem luftdurchströmten restlichen Schachtraum 3a mittels der Trennwand 5 ein streifender Kontakt zwischen dem erhitzten Kühlluftstrom 4d und dem herabfallenden Branntkalk 2* wirksam vermieden wird. Entsprechend wird eine Staubaufwirbelung in dem Schachtraum beinahe vollständig unterdrückt, so dass der erhitzte Kühlluftstrom 4d weitgehend staubfrei als Sekundärluft in den Drehrohrofen gelangt.

## Patentansprüche

1. Vorrichtung zum Brennen von Feststoffen, wie Branntkalk, Dolomitkalk oder Zement, mit einem Drehrohrofen (1), in dem das längs durch den Ofen (1) gefördert Brenngut (2) mittels einer Brenneinheit (1b) gebrannt wird, mit einer dem Ofen (1) nachgclagerten Kühlstrecke (4), in der mittels mindestens eines kühlgebläses ein aufsteigender Kühlluftstrom (4b, 4b*) zur Kühlung des in der Kühlstrecke (4) auf einem Boden (4a) geförderten gebrannten Brenngutes (2*) erzeugt, wird, wobei der Boden (4a) der Kühlstrecke (4) Durchlaßöffnungen für den Kühlluftstrom (4b, 4b*) aufweist, und mit einem den Auslauf (1a) des Drehrohrofens (1) mit der Kühlstrecke (4) verbindenden, einen Schachtraum (3a) aufweisenden Ofenkopf (3), wobei der das aus dem Ofen (1) austretende und durch den Schachtraum (3a) auf den Boden (4a) der Kühlstrecke (4) fallende gebrannte Brenngut (2*) durchströmende und **dadurch** erhitzte Kühlluftstrom (4d) durch den Schachtraum (3a) in den Ofen (1) aufsteigt und dort als Sekundärluft die Flamme (1c) der Brenneinheit (1b) speist, im Schachtraum (3a) mindestens eine Trennwand (5) zur Separierung des aufsteigenden erhitzten Kühlluftstromes (4d) von dem aus dem Ofen (1) austretendem, auf den Boden (4a) der Kühlstrecke (4) fallenden gebrannten Brenngut (2*) angeordnet ist, **dadurch gekennzeichnet, dass** die mindestens eine Trennwand (5) höhenverstellbar ausgebildet ist.

2. Vorrichtung nach Anspruch 1,
**dadurch gekennzeichnet, dass**
die Trennwand (5) schwenkbar gelagert ist.

3. Vorrichtung nach Anspruch 1 oder 2
**dadurch gekennzeichnet, dass**
die Trennwand (5) mit einer feuerfesten Beschichtung versehen\ ist.

4. Vorrichtung nach einem der Ansprüche 1 bis 3,
**dadurch gekennzeichnet, dass**
d i e Trennwand (5) durch eine im Inneren der Trennwand vorgesehene Kühleinrichtung gekühlt ist.

5. Vorrichtung nach einem der Ansprüche 1 bis 4,
**dadurch gekennzeichnet, dass**
die Kühlleistung der Kühlstrecke (4) im Auftreffbereich des gebrannten Brenngutes (2*) auf dem Boden (4a) der Kühlstrecke (4) gegenüber dem dem Auftreffbereich nachfolgenden Bereich der KühlsLrecke (4) reduziert ist.

6. Vorrichtung nach einem der Ansprüche 1 bis 5,
**dadurch gekennzeichnet, dass**
der Volumenstrom des vom Kühlgebläse in den Auftreffbereich des gebrannten Brenngutes (2*) einströmenden Kühlluftteilstomes (4b*) einstellbar ist.

7. Vorrichtung nach einem der Ansprüche 1 bis 6,
**dadurch gekennzeichnet, dass**
die Kühlstrecke (4) derart ausgebildet ist, dass sich im Auftreffbereich des gebrannten Brenngutes (2*) ein horizontaler Kühlluftstrom bildet.

8. Vorrichtung nach Anspruch 7
**dadurch gekennzeichnet, dass**
der Boden (4a) der Kühlstrecke (4) im Auftreffbereich des gebrannten Brenngutes (2*) treppenförmig ausgebildet ist.

9. Vorrichtung nach einem der Ansprüche 1 bis 8,
**dadurch gekennzeichnet, dass**
der Schachtraum (3a) des Ofenkopfes (3) eine optimierte Form im Sinne einer Minimierung des Strömungswiderstandes aufweist.

10. Vorrichtung nach einem der Ansprüche 1 bis 9,
**dadurch gekennzeichnet, dass**
der Ofenkopf an seiner Oberseite eine Wartungsklappe aufweist.

11. Verfahren zum Brennen von Feststoffen mit einem Drehrohrofen (1), in dem das längs durch den Ofen (1) geförderte Brenngut (2) mittels einer Brenneinheit (1b) gebrannt wird, mit einer dem Ofen (1) nachgelagerten Kühlstrecke (4), in der mittels mindestens eines Kühlgebläses ein aufsteigender Kühlluftstrom (4b, 4b*) zur Kühlung des in der Kühlstrecke (1) auf einem Boden (4a) geförderten gebrannten Brenngutes (2*) erzeugt wird, wobei der Boden (4a) der Kühlstrecke (4) Durchlaßöffnungen für den Kühlluftstrom (4h, 4b*) aufweist, und mit einem den Auslauf (1a) des Drehrohrofens (1) mit der Kühlstrecke (4) verbindende, einen Schachtraum (3a) aufweisenden ofenkopf (3), wobei der das aus dem Ofen (1) austretende und durch den Schachtraum (3a) auf den Boden (4a) der Kühlstrecke (4) fallende gebrannte Brenngut (2*) durchströmende und **dadurch** erhitzte Kühltuftstrom (4d) durch den Schachtraum (3a) in den Ofen (1) aufsteigt und dort als Sekundärluft die Flamme (1c) der Brenneinheit (1b) speist,
**dadurch gekennzeichnet, dass**
eine Vorrichtung gemäß einem der Ansprüche 1 bis 10 verwendet wird.

## Claims

1. A device for burning solid matter such as quicklime, dolomite lime or cement, comprising a rotary kiln (1) in which the combustion material (2) conveyed longitudinally through the kiln (1) is burned by means of a combustion unit (1b), comprising a cooling section (4) located downstream of the kiln (1) in which a rising cooling air stream (4b, 4b*) is produced by means of at least one cooling fan for cooling the burnt combustion product (2*) conveyed in the cooling section (4) on a bottom (4a), wherein the bottom (4a) of the cooling section (4) has through openings for the cooling air stream (4b, 4b*), and comprising a kiln head (3) having a chute (3a), which connects the outlet (1a) of the rotary kiln (1) to the cooling section (4), wherein the cooling air stream (4d) flowing through the burnt combustion product (2*) leaving the kiln (1) and deposited through the chute (3a) onto the bottom (4a) of the cooling section (4) and thereby heated rises through the chute (3a) into the kiln (1) and there feeds the flame (1c) of the combustion unit (1b) as secondary air, at least one dividing wall (5) for separating the rising heated cooling air stream (4d) from the burnt combustion product (2*) emerging from the kiln (1) and deposited on the bottom (4a) of the cooling section (4) is disposed in the chute (3a), **characterised in that** the at least one dividing wall (5) is adjustable in height.

2. The device according to claim 1, **characterised in that** the dividing wall (5) is pivotably mounted.

3. The device according to claim 1 or 2, **characterised in that** the dividing wall (5) is provided with a refractory coating.

4. The device according to any one of claims 1 to 3, **characterised in that** the dividing wall (5) is cooled by a cooling device provided in the interior of the dividing wall.

5. The device according to any one of claims 1 to 4, **characterised in that** the cooling capacity of the cooling section (4) in the area of impingement of the burnt combustion product (2*) on the bottom (4a) of the cooling section (4) is reduced compared with the area of the cooling section (4) downstream of the area of impingement.

6. The device according to any one of claims 1 to 5, **characterised in that** the volume flow of the cooling air partial stream (4b*) flowing from the cooling fan into the area of impingement of the burnt combustion product (2*) is adjustable.

7. The device according to any one of claims 1 to 6, **characterised in that** the cooling section (4) is configured in such a manner that a horizontal cooling air stream is formed in the area of impingement of the burnt combustion product (2*).

8. The device according to claim 7, **characterised in that** the bottom (4a) of the cooling section (4) is configured as staircase-shaped in the area of impingement of the burnt combustion product (2*).

9. The device according to any one of claims 1 to 8, **characterised in that** the chute (3a) of the kiln head (3) has an optimised shape in the sense of minimising the flow resistance.

10. The device according to any one of claims 1 to 9, **characterised in that** the kiln head has a maintenance flap on its upper side.

11. A method for burning solid matter, comprising a rotary kiln (1) in which the combustion material (2) conveyed longitudinally through the kiln (1) is burned by means of a combustion unit (1b), comprising a cooling section (4) located downstream of the kiln (1) in which a rising cooling air stream (4b, 4b*) is produced by means of at least one cooling fan for cooling the burnt combustion product (2*) conveyed in the cooling section (4) on a bottom (4a), wherein the bottom (4a) of the cooling section (4) has through openings for the cooling air stream (4b, 4b*), and comprising a kiln head (3) having a chute (3a), which connects the outlet (1a) of the rotary kiln (1) to the cooling section (4), wherein the cooling air stream (4d) flowing through the burnt combustion product (2*) leaving the kiln (1) and deposited through the chute (3a) onto the bottom (4a) of the cooling section (4) and thereby heated rises through the chute (3a) into the kiln (1) and there feeds the flame (1c) of the combustion unit (1b) as secondary air, **characterised in that** a device according to any one of claims 1 to 10 is used.

## Revendications

1. Dispositif pour la cuisson de matières solides, comme chaux vive ou ciment, avec un four tubulaire tournant (1), dans lequel le produit à calciner (2), convoyé longitudinalement à travers le four (1), est calciné au moyen d'une unité de calcination (1b), avec une section de refroidissement (4), installée en aval du four (1), dans laquelle, au moyen d'au moins une soufflante d'air de refroidissement, est généré un courant d'air de refroidissement (4b, 4b*) ascendant pour 1e refroidissement du produit calciné (2*), transporté sur une sole (4a) dans la section de refroidissement (4), la sole (4a) de la section de refroidissement (4) présentant des orifices de passage pour le courant d'air de refroidissement (4b, 4b*), et avec une tête de four (3) présentant une trémie (3a) et reliant la sortie (1a) du four tubulaire tournant (1) à la section de refroidissement (4), le courant d'air de refroidissement (4d), s'échauffant en passant à travers le produit calciné (2*), qui sort du four (1) et tombe, par la trémie (3a), sur la sole (4a) de la section de refroidissement (4), monte dans le four (1), par la trémie (3a), et y alimente, en tant qu'air secondaire, la flamme (1c) de l'unité de calcination (1b), au moins une paroi de séparation (5) étant disposée dans la trémie (3a), pour séparer le courant d'air de refroidissement (4d) ascendant, réchauffé et le produit calciné (2*) sortant du four (1) et tombant sur la sole (4a) de la section de refroidissement (4), **caractérisé en ce qu'**au moins une paroi de séparation (5) est réalisée réglable en hauteur.

2. Dispositif selon la revendication 1**, caractérisé en ce que** la paroi de séparation (5) est montée de manière à pouvoir pivoter.

3. Dispositif selon revendication 1 ou 2, **caractérisé en ce que** la paroi de séparation (5) est pourvue d'un revêtement résistant au feu.

4. Dispositif selon l'une des revendications 1 à 3, **caractérisé en ce que** la paroi de séparation (5) est refroidie par un système de refroidissement, qui est prévu à l'intérieur de ladite paroi de séparation.

5. Dispositif selon l'une des revendications 1 à 4, **caractérisé en ce que** la puissance frigorifique de la section de refroidissement (4) dans la zone d'impact du produit calciné (2*) sur la sole (4a) de la section de refroidissement (4) est réduite par rapport à celle de la zone de la section de refroidissement (4), qui succède à la zone d'impact.

6. Dispositif selon l'une des revendications 1 à 5, **caractérisé en ce que** le flux volumétrique du courant partiel d'air de refroidissement, s'écoulant de la soufflante d'air de refroidissement dans la zone d'impact du produit calciné (2*) est réglable.

7. Dispositif selon l'une des revendications 1 à 6, **caractérisé en ce que** la section de refroidissement (4) est conçue de sorte qu'un courant d'air de refroidissement horizontal se forme dans la zone d'impact du produit calciné (2*).

8. Dispositif selon la revendication 7, **caractérisé en ce que** la sole (4a) de la section de refroidissement (4) est réalisé en forme d'escalier dans la zone d'impact du produit calciné (2*).

9. Dispositif selon l'une des revendications 1 à 8, **caractérisé en ce que** l'intérieur de la trémie (3a) de la tête de four (3) présente une forme optimalisée au sens d'une minimalisation de la résistance d'écoulement.

10. Dispositif selon l'une des revendications 1 à 9, **caractérisé en ce que** la tête de four (3) présente, sur son côté supérieur, un volet d'entretien.

11. Procédé pour la calcination de matières solides, avec un four tubulaire tournant (1), dans lequel le produit à calciner (2), convoyé à travers le four (1), dans le sens de la longueur, est calciné au moyen d'une unité de calcination (1b), avec une section de refroidissement (4), installée en aval du four (1), dans laquelle, au moyen d'au moins une soufflante d'air de refroidissement, est généré un courant d'air de refroidissement (4b, 4b*) ascendant pour le refroidissement du produit calciné (2*), transporté sur une sole (4a) dans la section de refroidissement (4), la sole (4a) de la section de refroidissement (4) présentant des orifices de passage pour le courant d'air de refroidissement (4a, 4b*), et avec une tête de four (3), qui, présentant une trémie (3a), reliant la sortie (1a) du four tubulaire tournant (1) à la section de refroidissement (4), le courant d'air de refroidissement (4d), qui s'échauffe en passant à travers le produit calciné (2*), sortant du four (1) et tombant, par la trémie (3a), sur la sole (4a) de la section de refroidissement (4), monte dans le four (1), par la trémie (3a), et y alimente, en tant qu'air secondaire, la flamme (1c) de l'unité de calcination (1b), **caractérisé en ce que** l'on utilise un dispositif selon l'une des revendications 1 à 10.
